Europäisches Patentamt

European Patent Office

Office européen des brevets

(19)

(11) Veröffentlichungsnummer : **0 022 582**
**B1**

(12) # EUROPÄISCHE PATENTSCHRIFT

(45) Veröffentlichungstag der Patentschrift :
03.11.82

(51) Int. Cl.³ : **H 02 H 3/38**, H 02 H 7/26

(21) Anmeldenummer : **80200308.7**

(22) Anmeldetag : **08.04.80**

(54) Einrichtung für den Kurzschlußschutz von Wechselstromleitungen.

(30) Priorität : **02.07.79 CH 6177/79**

(43) Veröffentlichungstag der Anmeldung :
**21.01.81 (Patentblatt 81/03)**

(45) Bekanntmachung des Hinweises auf die Patenterteilung : **03.11.82 Patentblatt 82/44**

(84) Benannte Vertragsstaaten :
**CH DE FR GB LI SE**

(56) Entgegenhaltungen :
**AT B 214 002**
**CH A 219 286**
**DE A 2 425 651**
**DE B 1 588 481**
**DE B 2 640 934**
**DE C 461 495**
**DE C 598 723**
**DE C 1 176 251**

(73) Patentinhaber : **BBC Aktiengesellschaft Brown, Boveri & Cie.**
**CH-5401 Baden (CH)**

(72) Erfinder : **Braissant, Pierre**
**25, Rue des Communaux**
**CH-1800 Vevey (CH)**
Erfinder : **De Mesmaeker, Ivan, Dipl.-Ing.**
**Ahornstrasse 15**
**CH-5442 Fislisbach (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

## Einrichtung für den Kurzschlußschutz von Wechselstromleitungen

Die Erfindung bezieht sich auf eine Einrichtung für den Kurzschlußschutz von Wechselstromleitungen nach dem Oberbegriff des Anspruchs 1.

Eine solche Schutzeinrichtung ist bekannt aus « Brown Boveri Mitteilungen », 1966, Nr. 11/12, S. 786. Bei einer solchen, mit Phasenvergleichs-Meßsystem arbeitenden Distanzschutzeinrichtung sollen Transienten in Strom und Spannung möglichst wenig in die Meßgenauigkeit, d.h. in die Lage der tatsächlichen Ansprech- oder Schutzzonengrenze, eingehen. Speziell bei Schutzrelais mit Polygonkennlinie in der komplexen Impedanzebene sind in dieser Hinsicht hohe Anforderungen zu stellen, weil bereits geringe Winkelfehler — insbesondere eine Drehung der Reaktanzgrenze des Auslösegebietes — im Gegensatz zu Kreiskennlinien eine vergleichsweise starke Verschiebung des Schnittpunktes der Kennlinie mit der Leitungsgeraden, d.h. der Ansprechgrenze, zur Folge haben. Weiterhin tritt bei Schutzrelais mit mehreren Meßsystemen, z.B. bei Polygon-Relais mit (neben Resistanzglied) einem die Reaktanzgrenze bestimmenden Meßsystem (Reaktanzglied) und einem die Fehlerrichtung bezüglich des Meßortes bestimmenden Meßsystem (Richtungsglied), in vermaschten Netzen, insbesondere bei Doppelspeisung von Parallel-Leitungen mit je einem Schutzrelais an den Leitungsenden, das Problem des sogenannten « Systemwettlaufs » in Erscheinung, wenn ein Kurzschluß auf einer Leitung entsprechend der Wirkungsweise des Staffelschutzes zuerst an einem Leitungsende und mit einer gewissen Verzögerung danach am anderen Leitungsende abgeschaltet wird oder nach der einseitigen Abschaltung verschwindet. In den Parallel-Leitungen kehrt sich die Energierichtung dann nämlich nach der ersten einseitigen Abschaltung um, so daß sich die Arbeitspunkte in den Meßsystemen der beiderseitigen Schutzrelais unter Überquerung des Auslösegebietes verändern. Dabei gehen die Meßsysteme eines Relais zueinander gegensinnig vom Sperrzustand in den Auslösezustand über, so dass eine Verzögerung infolge transienter Störsignale oder dergl. das Zusammentreffen des Auslösezustandes in beiden Systemen und damit infolge der konjunktiven Verknüpfung der Systeme im Sinne der Gesamt-Auslösekennlinie eine Fehlauslösung auf einer gesunden Leitung zur Folge haben kann.

Aufgabe der Erfindung ist daher die Schaffung einer Einrichtung für den Leitungsschutz, die sich durch Unempfindlichkeit gegen transiente Störungen hinsichtlich Fehlauslösungen auszeichnet. Die erfindungsgemässe Lösung kennzeichnet sich hinsichtlich der Einrichtung durch die im Anspruch 1 angegebenen Merkmale. Die danach vorgesehene Aufrechterhaltung des Sperrzustandes beim Übergang in den Auslösezustand, und zwar für ein begrenztes, die Schutzfunktion nicht beeinträchtigendes Zeitintervall, schließt mit hoher Sicherheit das Zusammentreffen von an sich nicht zusammengehörigen Relaiszuständen bei gegensinnigen Zustandsänderungen von Relaissystemen aus und erhöht auch allgemein die Funktionssicherheit gegenüber transienten Signalkomponenten oder Störsignalen. Dabei macht sich die angegebene Schaltungslösung besonders das Vorhandensein oder die leichte Ableitbarkeit von komplementären Koinzidenz- und Antikoinzidenzsignalen zunutze, die bekanntlich ein Maß für den Phasenwinkel zwischen einer Leitungsmessgröße, z.B. der üblichen Differenzspannung zwischen Leitungsspannung Uk und Bezugsspannung Ur, und einer Bezugsgrösse, z.B. der Bezugsspannung Ur, darstellen, und zwar das Antikoinzidenzsignal für den Phasenwinkel p selbst und das Koinzidenzsignal für dessen Komplement pk. Der inverse Charakter dieser Signale ermöglicht eine entsprechend komplementäre Verwendung im Auslöse- bzw. Sperrsinn. Eine Verriegelung in Abhängigkeit vom Antikoinzidenzsignal erlaubt also vorteilhaft einfach eine vorrangige Sperrung, wobei die Anwendung von Selbsthaltekreisen ebenso einfach eine definierte Zeitdauer für die vorrangige Sperrung in der Größe einer Halbperiode oder mehr erlaubt. Weitere Merkmale und Vorteile der Erfindung werden anhand des in den Zeichnungen dargestellten Ausführungsbeispiels erläutert. Hierin zeigt :

Figur 1 die Prinzipanordnung einer zweiseitig gespeisten Doppelleitung mit Kurzschluss auf einer Leitung,

Figur 2 die Doppelleitung wie in Fig. 1, jedoch nach einseitiger Abschaltung der betroffenen Leitung,

Figur 3 eine Polygonkennlinie mit Arbeitspunkten beiderseits des Auslösegebietes entsprechend einem Zustand vor und nach der einseitigen Abschaltung,

Figur 4 das Blockschaltbild eines Zweisystem-Schutzrelais mit Übergangsverriegelung nach der Erfindung und

Figur 5 ein Signal-Zeitdiagramm zur Wirkungsweise der Schaltung nach Fig. 4.

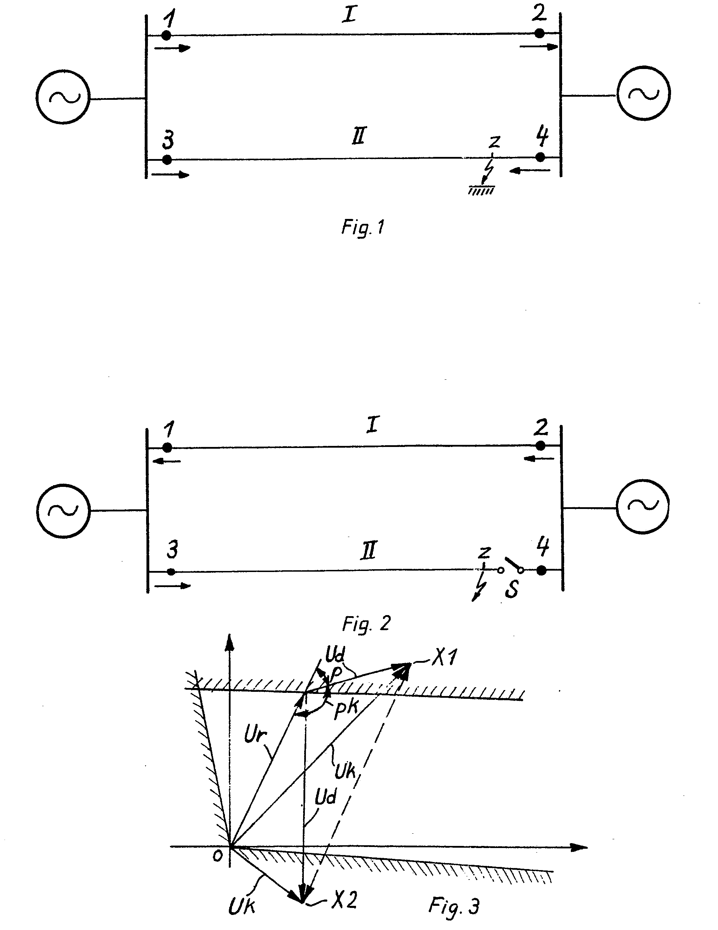

Fig. 1 und 2 zeigen eine Doppelleitung I, II zwischen zwei gespeisten Sammelschienen, wobei auf Leitung II bei z ein Kurzschluss angenommen ist. Die Energieflussrichtungen gemäss dem sich aus den beiden Quellen über die Leitungsverzweigungen speisenden Kurzschlußstrom, d.h. die an den Schutzrelais 1 bis 4 an den Leitungsenden detektierten Fehlerrichtungen, sind durch die eingetragenen Pfeile veranschaulicht. Durch Auftrennen der Leitung an dem mit Schutzrelais 4 verbundenen Leistungsschalter S wird die Leitung nach Fehlereintritt einseitig abgeschaltet. Damit ergeben sich die durch Vergleich von Fig. 1 und 2 ersichtlichen Änderungen der an den einzelnen Relais detektierten Fehlerrichtungen. Im Auslösediagramm nach Fig. 3 mit Polygonkennlinie ergibt sich z.B. ein gegensinniger Übergang zwischen den Betriebspunkten X1 und X2 für die Schutzrelais 1 und 2 der gesunden Leitung I unter Überquerung des Auslösegebietes. Schematisch sind für die gezeigten Betriebspunkte die Zeiger einer Bezugsspannung Ur sowie der Leitungsspannung Uk und der hieraus wie üblich gebildeten Differenzspannung Ud angedeutet.

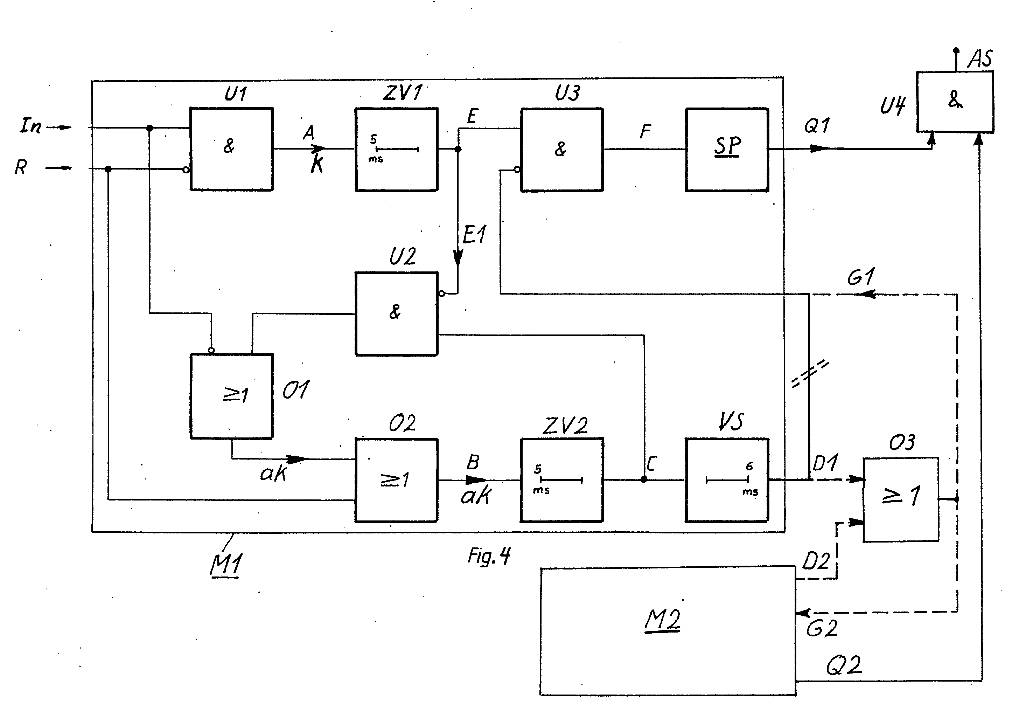

Die Schaltung nach Fig. 4 umfaßt einen Koinzidenzkanal mit dem repräsentativen Schaltungspunkt A und einen Antikoinzidenzkanal mit dem entsprechenden Schaltungspunkt B. Ein Koinzidenzsignal k wird am Eingang Inzugeführt und kann durch ein UND-Gatter UI mittels eines Rückstellsignals am Eingang R gesperrt werden. Über ein ODER-Gatter O1 mit invertierendem Eingang wird aus dem Koinzidenzsignal k das Antikoinzidenzsignal ak gebildet, das in einem ODER-Gatter O2 mit dem Rückstellsignal vom Eingang R überlagert werden kann. Das Koinzidenzsignal k und das Antikoinzidenzsignal ak werden Zeit-Grenzwertschaltern ZV1 bzw. ZV2 zugeführt, die eine Phasenwinkelunterschreitung bzw. -überschreitung zwischen der Bezugsspannung Ur und der Differenzspannung Ud mit dem Grenzwert von 90° bzw. 5 ms (bei 50 Hz Netzfrequenz) im Sinne eines Ein- bzw. Ausrückens des Betriebspunktes in den Auslösebereich bzw. aus diesem heraus detektieren. Ein bejahendes Binärsignal am Punkt E bedeutet also Auslösung, am Punkt C Sperrung. Im Ausgangszustand vor Fehlereintritt liegt der Punkt C auf « 1 », der Punkt E auf « 0 ». In diesem Zustand hält sich der Antikoinzidenzkanal über einen Haltestromkreis mit Sperr-UND-Gatter U2 selbst, bis der erste Auslösebefehl mit « 1 » am Punkt E auftritt und den Haltekreis über den Sperreingang E1 des Sperr-UND-Gatter U2 unterbricht. Die Sperrung des Koinzidenzkanals bleibt aber infolge einer 6ms-Verzögerungsschaltung VS mit « 1 » am Punkt D1 über ein Sperr-UND-Gatter U3 für mindestens einen Zeitraum von weiteren 6ms, ab Anregung mit erster Überschreitung des 90°- bzw. 5ms-Koinzidenzintervalls, also insgesamt für mindestens eine Halbperiode, erhalten, so daß die erwähnten Übergangserscheinungen mit etwaiger gleichzeitiger Auslösung des Meßsystems M1 (gebildet durch die beiden dargestellten Signalkanäle) und eines komplementären, gleich aufgebauten Meßsystems M2 sicher überbrückt werden. Anschliessend gibt das Sperr-UND-Gatter U3 mit Abfall des Haltekreises die Auslösung mit « 1 » am Punkt F und über eine übliche Speicherschaltung SP zum UND-Gatter U4 für die Überlagerung der Kennlinien der Meßsysteme M1 und M2 zum Ausgang AS frei.

Mit Vorteil kann auch eine gemeinsame, gegenseitige Verriegelung beider Meßsysteme M1 und M2, die etwa einem Reaktanzglied und einem Richtungsglied entsprechen, mittels der strichliert angedeuteten Schaltungsverbindungen mit Antikoinzidenz-Sperrausgang D2 des Meßsystems M2 und koppelndem ODER-Gatter O3 vorgesehen werden. Sperreingänge G1 und G2 führen in beiden Systemen zu Sperr-UND-Gattern entsprechend dem Sperr-UND-Gatter U3 im Meßsystems M1. Die Auslöseausgänge Q1 und Q2 der Systeme werden dann bereits in Abhängigkeit von dem Antikoinzidenz-Sperrsignal in nur einem System, d.h. mit grosser Ausfallsicherheit, für die Übergangszeit blockiert.

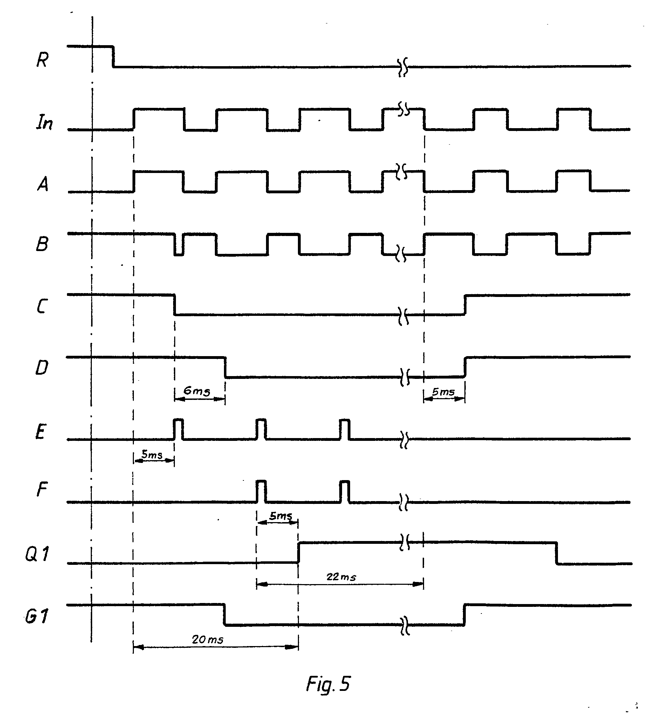

Fig. 5 zeigt den ohne weiteres verständlichen Signalverlauf an den verschiedenen, bereits erwähnten Schaltungspunkten von Fig. 4.

## Ansprüche

1. Einrichtung für den Kurzschlußschutz von Wechselstromleitungen, insbesondere mit Doppelspeisung mindestens zweier Parallel-Leitungen (I, II), an deren Enden je ein Schutzrelais (1, 2, 3, 4) vorgesehen ist, mit mindestens einem Schutzrelais (1, 2, 3, 4), das wenigstens ein Koinzidenz- oder Antikoinzidenz-Phasenwinkelmeßsystem (M1, M2) für einen Grenzwertvergleich des Phasenwinkels (p) zwischen einer Leitungsmeßgröße (Ud) oder einer davon abgeleiteten Grösse und einer Bezugsgröße (Ur) aufweist, dadurch gekennzeichnet, daß das Schutzrelais (1, 2, 3, 4) für jedes Phasenwinkelmeßsystem (M1, M2) einen Signalkanal (A), für ein binäres Koinzidenzsignal (k) und einen Signalkanal (B) für ein binäres Antikoinzidenzsignal (ak) entsprechend dem Phasenwinkelkomplement (pk) und dem Phasenwinkel (p) zwischen der Leitungsmeßgröße (Ud) und der Bezugsgröße (Ur) aufweist und daß ein Ausgang (D1) des Signalkanals (B) für das binäre Antikoinzidenzsignal (ak) mit dem Ausgang (Q1) des Phasenwinkelmeßsystems (M1) über eine für jeweils begrenzte Zeitintervalle aktivierbare Verriegelungsschaltung (U2, U3) in sperrender Steuerverbindung steht, wobei jedes Schutzrelais (1, 2, 3, 4) beim Übergang von einem Sperrzustand in einen Auslösezustand ausgangsseitig für mindestens eine Halbperiode im Sperrzustand gehalten wird.

2. Einrichtung nach Anspruch 1, dadurch gekennzeichnet, daß der Signalkanal (B) für das Antikoinzidenzsignal (ak) einen Selbsthaltekreis (C, U2, O1) mit einem an den Signalkanal (A) für das Koinzidenzsignal (k) angeschlossenen Sperreingang (E1) aufweist.

3. Einrichtung nach Anspruch 2, dadurch gekennzeichnet, daß der Selbsthaltekreis (C, U2, O1) ein Sperr-UND-Gatter (U2) aufweist, das mit einem Eingang an den Ausgang (C) eines Zeit-Grenzwertschalters (ZV2) im Signalkanal (B) für das Antikoinzidenzsignal (ak) sowie mit dem Sperreingang (E1) an den Ausgang (E) eines Zeit-Grenzwertschalters (ZV1) im Signalkanal (A) für das Koinzidenzsignal (k) und mit seinem Ausgang über ein ODER-Gatter (O1) an die Eingangsseite des Signalkanals (B) für das Antikoinzidenzsignal (ak) angeschlossen ist.

4. Einrichtung nach einem der Ansprüche 1 bis 3, dadurch gekennzeichnet, dass ein Schutzrelais zwei Phasenwinkelmeßsystem (M1, M2) umfaßt, insbesondere ein Reaktanz-Meßsystem (M1) und ein Richtungs-Meßsystem (M2) als Teilsysteme eines Schutzrelais mit Polygon-Auslösekennlinie, und daß die Zeitintervall-Verriegelungs-schaltungen (U2, U3) beider Phasenwinkelmeß-systeme (M1, M2) jeweils wechselweise an einen im Sperrsinn aktivierenden Ausgang (D1) des Signalkanals (B) für das Antikoinzidenzsignal (ak) des anderen Phasenwinkelmeßsystems (M1, M2) angeschlossen sind.

5. Einrichtung nach Anspruch 4, dadurch gekennzeichnet, dass die Zeitintervall-Verriegelungsschaltungen (U2, U3) beider Phasenwinkelmeßsystem (M1, M2) über ein ODER-Gatter (O3) mit den Signalkanälen (B) für das Antikoinzidenzsignal (ak) beider Phasenwinkelmeßsysteme (M1, M2) in Steuerverbindung stehen.

## Claims

1. A device for short-circuit protection of alternating-current lines, in particular including the dual feeding of at least two parallel lines (I, II) at the ends of which in each case one protective relay (1, 2, 3, 4) is provided, having at least one protective relay (1, 2, 3, 4) which has at least one coincidence or anticoincidence phase angle measuring system (M1, M2) for comparing the limit values of the phase angle (p) between a line test value (Ud) or a value derived therefrom and a reference value (Ur), characterised in that the protective relay (1, 2, 3, 4) has for each phase angle measuring system (M1, M2) one signal channel (A) for a binary coincidence signal (k) and one signal channel (B) for a binary anticoincidence signal (ak) which corresponds to the complement of the phase angle (pk) and to the phase angle (p) between the line test value (Ud) and the reference value (Ur), and that an output (D1) of the signal channel (B) for the binary anticoincidence signal (ak) is connected to provide inhibiting control to the output (Q1) of the phase angle measuring system (M1) via a latching circuit (U2, U3) which can be actuated for a time interval which is limited in each case, the output of each protective relay (1, 2, 3, 4) being held in the inhibited condition for at least half a period during the transition from an inhibited condition to a released condition.

2. A device according to Claim 1, characterised in that the signal channel (B) for the anticoincidence signal (ak) is provided with a self-holding circuit (C, U2, O1) having an inhibiting input (E1) which is connected to the signal channel (A) for the coincidence signal (k).

3. A device according to Claim 2, characterised in that the self-holding circuit (C, U2, O1) is provided with an inhibiting AND gate (U2) one input of which is connected to the output (C) of a time limit switch (ZV2) in the signal channel (B) for the anticoincidence signal (ak) and the inhibiting input (E1) is connected to the output (E) of a time limit switch (ZV1) in the signal channel (A) for the coincidence signal (k) and the output of which is connected via an OR gate (O1) to the input side of the signal channel (B) for the anticoincidence signal.

4. A device according to one of Claims 1 to 3, characterised in that a protective relay comprises two phase-angle measuring systems (M1, M2) and particularly a reactance measuring system (M1) and a direction measuring system (M2) as subsystems of a protective relay having a polygonal tripping characteristic, and that the time interval latching circuits (U2, U3) of the two phase angle measuring systems (M1, M2) are in each case alternately connected to an output (D1), the actuating function of which acts in the inhibiting direction, of the signal channel (B) for the anticoincidence signal (ak) of the other phase angle measuring system (M1, M2).

5. A device according to Claim 4, characterised in that the time interval latching circuits (U2, U3) of the two phase angle measuring systems (M1, M2) are connected via an OR gate (O3) to control the signal channels (B) for the anticoincidence signal (ak) of the two phase angle measuring systems (M1, M2).

## Revendications

1. Installation pour protéger contre les courts-circuits les lignes à courant alternatif, en particulier avec alimentation double d'au moins deux lignes en parallèle (I, II), munies chacune à leurs extrémités d'un relais de protection (1, 2, 3, 4), au moyen d'un relais de protection (1, 2, 3, 4) qui comporte au moins un système de mesure d'angle de phase à coïncidence ou anticoïncidence (M1, M2) pour une comparaison de la valeur limite de l'angle de phase (p) entre une grandeur de mesure de ligne (Ud) ou une grandeur qui en est dérivée et une grandeur de référence (Ur), caractérisée en ce que le relais de protection (1, 2, 3, 4) pour chaque système de mesure d'angle de phase (M1, M2) comporte un canal de signal (A) pour un signal de coïncidence binaire (k) et un canal de signal (B) pour un signal d'anticoïncidence binaire (ak) correspondant au complément de l'angle de phase (pk) et à l'angle de phase (p) entre la grandeur de mesure de ligne (Ud) et la grandeur de référence (Ur) et une sortie (D1) du canal de signal (B) pour le signal d'anticoïncidende binaire (ak) se trouve en relation de commande de verrouillage avec la sortie (Q1) du système de mesure d'angle de phase (M1) par l'intermédiaire d'une connexion de verrouillage (U2 et U3) activable pendant des intervalles de temps dont chacun est limité, de sorte que chaque relais de protection (1, 2, 3, 4) lors de son passage de l'état verrouillé à l'état déclenché est maintenu initialement dans l'état verrouillé pendant au moins une demi-période.

2. Installation suivant la revendication 1, caractérisée en ce que le canal de signal B pour le signal d'anticoïncidence (ak) comporte un circuit de maintien (C, U2, O1) avec une entrée de verrouillage (E1) connectée au canal de signal (A) pour le signal de coïncidence (k).

3. Installation suivant la revendication 2, caractérisée en ce que le circuit de maintien (C, U2, O1) comporte une porte ET de verrouillage (U2) qui est connectée par une entrée à la sortie (C) d'un interrupteur à limite de temps (ZV2) dans le canal de signal (B) pour le signal d'anticoïncidence (ak), ainsi que par l'entrée de verrouillage (E1) à la sortie (E) d'un interrupteur à limite de temps (ZV1) dans le canal de signal (A) pour le signal de coïncidence (k) et par sa sortie, par l'intermédiaire d'une porte OU (O1), au côté d'entrée du canal de signal (B) pour le signal d'anticoïncidence (ak).

4. Installation suivant l'une quelconque des revendications 1 à 3, caractérisée en ce qu'un relais de protection comprend deux systèmes de mesure de l'angle de phase (M1, M2), en particulier un système de mesure de réactance (M1) et un système de mesure de direction (M2), comme systèmes partiels d'un relais de protection avec ligne caractéristique de déclenchement polygonale et les circuits de verrouillage à intervalle de temps (U2 et U3) des deux systèmes de mesure de l'angle phase (M1, M2) sont raccordés chacun, par permutation, à une sortie (D1) activant en vue du verrouillage du canal de signal (B) pour le signal d'anticoïncidence (ak) de l'autre système de mesure de l'angle de phase (M1, M2).

5. Installation suivant la revendication 4, caractérisée en ce que les circuits de verrouillage à intervalle de temps (U2 et U3) des deux systèmes de mesure de l'angle de phase (M1, M2) se trouvent en relation de commande, par l'intermédiaire d'une porte OU (O3), avec les canaux de signaux (B) pour le signal d'anticoïncidence (ak) des deux systèmes de mesure de l'angle de phase (M1, M2).

Fig. 1

Fig. 2

Fig. 3

Fig. 4

0 022 582

Fig. 5

3